Europäisches Patentamt

European Patent Office

Office européen des brevets

(19)

(11) Veröffentlichungsnummer: **0 186 728**
**B1**

(12) **EUROPÄISCHE PATENTSCHRIFT**

(45) Veröffentlichungstag der Patentschrift:
**01.03.89**

(21) Anmeldenummer: **85108204.0**

(22) Anmeldetag: **03.07.85**

(51) Int. Cl.⁴: **F 16 L 17/04,** F 16 L 21/06,
F 16 L 33/02

(54) Spannmuffe für Rohre.

(30) Priorität: **15.12.84 DE 3445807**

(43) Veröffentlichungstag der Anmeldung:
**09.07.86 Patentblatt 86/28**

(45) Bekanntmachung des Hinweises auf die Patenterteilung:
**01.03.89 Patentblatt 89/9**

(84) Benannte Vertragsstaaten:
**AT BE CH DE FR GB IT LI NL SE**

(56) Entgegenhaltungen:
**EP-A- 0 057 373**
**EP-A- 0 079 457**
**DE-A- 2 919 939**

(73) Patentinhaber: **MAGE AG, Industriestrasse,
CH-1781 Courtaman (CH)**

(72) Erfinder: **Gehring, Manfred, Plankstrasse 10,
D-7290 Freudenstadt 1 (DE)**
Erfinder: **Plüss, Heinz, Champ des Fontaines,
CH-1781 Courtaman (CH)**

(74) Vertreter: **Patentanwälte Kohler - Schwindling - Späth,
Hohentwielstrasse 41, D-7000 Stuttgart 1 (DE)**

## Beschreibung

Die Erfindung betrifft eine Spannmuffe für Rohre, bestehend aus einem gummielastischen Dichtungsring und einem den Dichtungsring umgebenden Spannring in Form eines kreisförmig gebogenen Blechstreifens, der radial nach innen abgewinkelte Ränder aufweist, welche die Stirnflächen des Dichtungsringes übergreifen, an dessen Enden nach außen gerichtete, einander gegenüberstehende und von wenigstens einer Spannschraube durchsetzte Spannelemente angebracht sind und bei dem der Spalt zwischen den Spannelementen von einem an der Außenseite des Dichtungsringes anliegenden Blechteil überbrückt wird, das ebenfalls radial nach innen abgewinkelte Ränder aufweist, die wenigstens an der Überlappungsstelle mit dem Ende des Spannringes zwischen die abgewinkelten Ränder des Spannringes passen.

Eine solche Spannmuffe ist aus EP-A-0 079 457 bekannt. Bei dieser bekannten Spannmuffe ist am einen Ende des den Spannring bildenden Blechstreifens ein besonderes Blechteil angeschweißt, das bis unter das andere Ende des Blechstreifens reicht. Dieses ebenfalls nach innen abgewinkelte Ränder aufweisende Blechteil ist schmaler als der Spannring. Die Spannelemente werden von zur Achse der ringförmigen Spannmuffe parallelen Bolzen gebildet, die in jeweils nach außen und hinten ösenartig abgebogene Abschnitte des den Spannring bildenden Blechteiles eingelegt sind.

Aus der FR-A 703 105 ist eine Spannmuffe für Rohre bekannt, bei welcher die Spannelemente von Spannplatten gebildet werden, die in einem gewissen Abstand von den Enden des Spannringes an dessen Außenseite befestigt sind, so daß sich die Endabschnitte des Spannringes unmittelbar überlappen können. Allerdings weist bei dieser bekannten Spannmuffe der Spannring keine radial nach innen abgewinkelten Ränder auf.

Spannmuffen der eingangs beschriebenen Art finden in großem Umfang zur Verbindung von Abwasserrohren aus Asbestzement und Gußeisen Verwendung. Wegen der Durchmessertoleranzen solcher Rohre kommt es vor, daß die Spannmuffen bei der Montage zum Ausgleich der unterschiedlichen Durchmesser aneinandergrenzender Rohre mit gleicher Nennweite in erheblichem Maße verspannt werden müssen. Dadurch kann es zu Verformungen des Dichtungsringes kommen, die ein seitliches Ausweichen des Dichtungsringes zur Folge haben und dadurch zu Undichtigkeiten führen. Zwar begrenzt der radial nach innen abgewinkelte Rand des Spannringes ein Ausbrechen des Dichtungsringes, jedoch lassen sich dadurch Undichtigkeiten nicht völlig vermeiden. Außerdem verursacht die Herstellung eines besonderen Blechteiles zur Überbrückung des Spaltes zwischen den Befestigungselementen und dessen Befestigung am Spannring zusätzliche Arbeitsschritte und verursacht demgemäß erhebliche Kosten.

Demgemäß liegt der Erfindung die Aufgabe zugrunde, eine Spannmuffe für Rohre der eingangs beschriebenen Art so weiterzubilden, daß die Dichtigkeit der Spannmuffe verbessert und insbesondere eine Abdichtung auch bei erhöhten Drükken gewährleistet ist, ohne daß dadurch der Aufbau und/oder die Handhabung der Spannmuffe kompliziert werden. Vielmehr soll sogar eine Kostensenkung möglich sein.

Diese Aufgabe wird nach der Erfindung dadurch gelöst, daß das den Spalt zwischen den Spannelementen überbrückende Blechteil von einem über eines der Spannelemente überstehende Endabschnitt des Spannringes gebildet wird, der wenigstens einen bis zu seinem Ende reichenden Längsschlitz aufweist.

Da bei der erfindungsgemäßen Spannmuffe das den Spalt zwischen den Spannelementen überbrückende Blechteil von einem über eines der Spannelemente überstehenden Endabschnitt des Spannringes selbst gebildet wird, ist der Spannring wegen seiner Einteiligkeit besonders einfach in der Ausbildung und zugleich besonders stabil. Der in dem überstehenden Endabschnitt angebrachte Längsschlitz gestattet es, die Breite des Spannringes an diesem Ende so weit zu verringern, daß er zwischen die abgewinkelten Ränder am anderen Ende des Spannringes paßt, so daß der den Spannring bildende Blechstreifen mit den abgewinkelten Rändern als endloses Band hergestellt werden kann, von dem dann die zur Herstellung der Spannringe benötigten Abschnitte abgetrennt werden. Ein besonderer Vorteil dieser Maßnahme besteht weiterhin darin, daß durch Verbiegen der durch den Längsschlitz getrennten Abschnitte auch ein gewisses Verkanten der ineinander gefügten Endabschnitte des Spannringes gegeneinander möglich ist, wie es leicht vorkommen kann, wenn die miteinander zu verbindenden Rohre unterschiedliche Durchmesser aufweisen.

Wenn bei der erfindungsgemäßen Spannmuffe ein Längsschlitz in der Mitte des Blechstreifens angeordnet ist, wird das Verbiegen der durch den Längsschlitz getrennten Abschnitte des Blechstreifens erleichtert und insbesondere ohne Gefahr einer Verformung des Blechstreifens möglich, wenn der Längsschlitz an seinem inneren Ende in einen Querschlitz mündet, an dessen Enden nur noch schmale Materialstreifen übrig bleiben, die einem Verbiegen der Abschnitte keinen großen Widerstand entgegensetzen. Deshalb ist es zweckmäßig, wenn sich der vorzugsweise im Bereich des Spannelementes, insbesondere einer Spannplatte angeordnete Querschlitz bis nahe an die äußeren Ränder des Spannringes erstreckt. Optimale Verhältnisse ergeben sich, wenn die Länge des Querschlitzes etwa 75% der Breite des Blechstreifens beträgt. Weiterhin kann es zweckmäßig sein, wenn sich der Längsschlitz nach außen hin verbreitert.

Bei einer alternativen Ausführungsform der Erfindung sind zwei Längsschlitze nahe je einem Rand des Spannringes angeordnet. Die dadurch gebildeten, relativ schmalen Randstreifen lassen sich wiederum ausreichend weit nach innen verbiegen, um zwischen die Ränder am anderen Ende des Blechstreifens zu passen. Dabei haben sie wegen ihres Winkelprofiles selbst eine sehr hohe Steifigkeit. Der zwischen den Längsschlitzen verbleibende Abschnitt des Spannringes liegt normalerweise nur auf einer kurzen Strecke nahe seiner Wurzel frei, so daß er auch relativ großen Radialkräften ohne weiteres standzuhalten vermag. Trotzdem kann es zweckmäßig sein, den zwischen den Längsschlitzen liegenden Abschnitt des Spannringes durch mindestens eine sich in Umfangsrichtung des Spannringes erstreckende Sicke zu versteifen. Hierdurch erhält dieser Abschnitt eine hohe Formstabilität, die besonders dann von Bedeutung ist, wenn die Spannmuffe noch nicht auf zu verbindenden Rohren montiert ist, sondern bei noch nicht geschlossenem Spannring freiliegt und dann leicht der Gefahr eines Verbiegens ausgesetzt ist.

Vorteilhaft werden zwei zu den Schlitzen parallele Sicken angeordnet. Weiterhin ist es zweckmässig, wenn die Sicken zum Ende des Abschnittes hin flach auslaufend ausgebildet sind, damit sie beim Zuziehen des Spannbandes ein Hinweggleiten über den eingespannten Dichtring in der Umfangsrichtung nicht behindern.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden.

Es zeigen:

Fig. 1 die Seitenansicht einer Spannmuffe nach der Erfindung,

Fig. 2 die Vorderansicht der Spannmuffe nach Fig. 1,

Fig. 3 eine Draufsicht auf den Spannring der Spannmuffe nach Fig. 1 ohne Spannschraube und so weit aufgebogen, daß sich seine Enden nicht mehr überlappen,

Fig. 4 eine Draufsicht auf das Ende des Spannringes einer weiteren Ausführungsform der Erfindung und

Fig. 5 einen Schnitt längs der Linie V–V durch das Spannring-Ende nach Fig. 4.

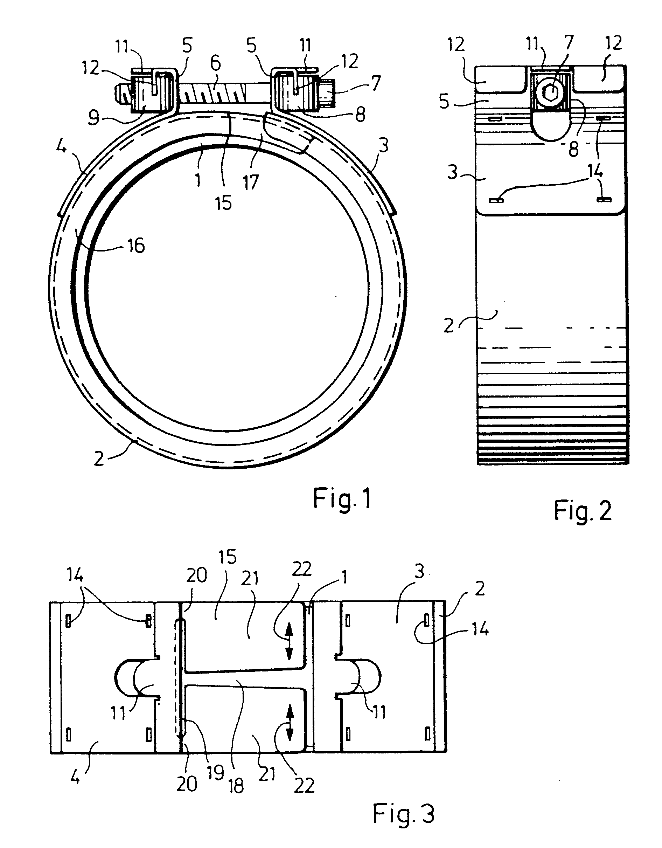

Die in den Fig. 1 und 2 dargestellte Spannmuffe besteht aus einem gummielastischen Dichtungsring 1 und einem den Dichtungsring umgebenden Spannring 2 in Form eines kreisförmig gebogenen Blechstreifens, an dessen Außenseite zwei Blechteile 3, 4 befestigt sind, deren einander zugewandte Enden abgewinkelt sind und einander mit Abstand gegenüberstehende, zueinander parallele Spannplatten 5 bilden. Diese Spannplatten werden von einer zentralen Spannschraube 6 durchsetzt, die sich mit ihrem Kopf 7 über ein Zwischenstück 8 und mit ihrem anderen Ende über ein als Mutter ausgebildetes Zwischenstück 9 an der jeweiligen Außenseite der Spannplatte 5 abstützen. Die Enden der auf den Spannring aufgesetzten, steifen Blechteile 3, 4 sind im Anschluß an die die Spannplatten 5 bildenden Abschnitte nochmals abgewinkelt, und zwar im Bereich der Mitte einfach und daran anschließend zweifach, so daß von den Spannplatten 5 im Bereich von deren Mitte Lappen 11 abstehen, welche die Enden der Zwischenstücke 8, 9 übergreifen und auf diese Weise Anschläge für die Zwischenstücke bilden. Die neben den Lappen 11 gelegenen Abschnitte sind U-förmig abgewinkelt, derart, daß die Schenkel 12 dieser Abschnitte seitlich neben den Zwischenstücken 8, 9 angeordnet sind und seitliche Anschläge für diese Zwischenstücke bilden. Zur Verbindung der Blechteile 3, 4 mit dem Spannring 2 dienen bei dem dargestellten Ausführungsbeispiel sogenannte Druckfüge-Verbindungen 14.

Von den beiden Blechteilen 3 und 4 ist das eine Blechteil 3 unmittelbar am Ende des Spannringes 2 angebracht, während über das andere Blechteil 4 ein Endabschnitt 15 des Spannringes übersteht, der bis unter das andere Ende des Spannringes 2 reicht und somit eine Brücke bildet, welche den Spannring zu einem vollständigen Kreis schließt. Die Ränder 16 des Spannringes 2 sind auf seiner ganzen Länge nach innen abgewinkelt, also auch im Bereich des Endabschnittes 15. Dabei ist die Breite des Endabschnittes 15 an dessen freiem Ende so weit vermindert, daß der Endabschnitt mit den abgewinkelten Rändern 17 zwischen die abgewinkelten Ränder 16 am anderen Ende des Spannringes 2 paßt. Zu diesem Zwecke weist der Endabschnitt 15 einen sich zu seinem offenen Ende hin verbreiternden Längsschlitz 18 auf, der vom freien Ende des Endabschnittes bis zu einem Querschlitz 19 reicht, der sich an der Stelle, wo sich die Spannplatte 5 des benachbarten Blechteiles 4 befindet, bis nahe zu den äußeren Rändern des Spannbandes 2 erstreckt, so daß an den Enden des Querschlitzes 9 nur schmale Verbindungsstellen 20 übrig bleiben, die ein Verbiegen der durch den Längsschlitz 18 getrennten Abschnitte 21 des Spannringes 2 in der durch diese Abschnitte definierten Tangentialebene, also in Richtung der Pfeile 22 in Fig. 3, ermöglichen. Dadurch ist es nicht nur möglich, den Endabschnitt 15 mit seinen abgewinkelten Rändern 17 zwischen die Ränder 16 am anderen Ende des Spannbandes einzuführen, sondern es wird auch eine starre Parallelführung der beiden Enden des Spannbandes zueinander vermieden, so daß der Spannring leicht gewisse Verformungen erleiden kann, wie sie immer dann auftreten, wenn die mittels einer solchen Spannmuffe miteinander zu verbindenden Rohre voneinander verschiedene Durchmesser haben. Diese Verformungen sind erforderlich, um trotz solcher Durchmesser-Unterschiede eine einwandfreie Verbindung und Abdichtung der Rohre mittels der Spannmuffe zu gewährleisten.

Die Schwächung des Endabschnittes 15 des Spannringes 2 durch die Schlitze 18, 19 ist völlig unbedenklich, weil die von diesen Schlitzen begrenzten Abschnitte 21 des Spannringes trotzdem eine hohe Biegesteifigkeit aufweisen und einwandfrei gehalten und geführt sind. Die Biegesteifigkeit ergibt sich durch die abgewinkelten Ränder 17, während die Lagefixierung einerseits durch die Verbindung mit dem Hauptteil des Spannringes 2 an den Enden des Querschlitzes 19 und andererseits durch die Anlage sowohl an der Innenseite des Spannringes 2 als auch an dessen abgewinkelten Rändern 16 gewährleistet ist. Dabei ist zu berücksichtigen, daß die Abschnitte 21 keinerlei in Umfangsrichtung der Spannmuffe wirkende Spannkräfte zu übertragen haben, sondern nur ein radiales und axiales Ausweichen des Dichtungsringes 1 im Bereich zwischen den beiden Spannplatten 5 verhindern sollen. Diese Aufgabe wird von den Abschnitten 21 einwandfrei erfüllt, so daß nunmehr der Dichtungsring 1 auf seinem gesamten Umfang einwandfrei an die Rohre angepreßt und auch in Axialrichtung eingespannt und auch unter starkem Innendruck eine einwandfreie Abdichtung der mittels einer solchen Spannmuffe miteinander verbundenen Rohre gewährleistet ist.

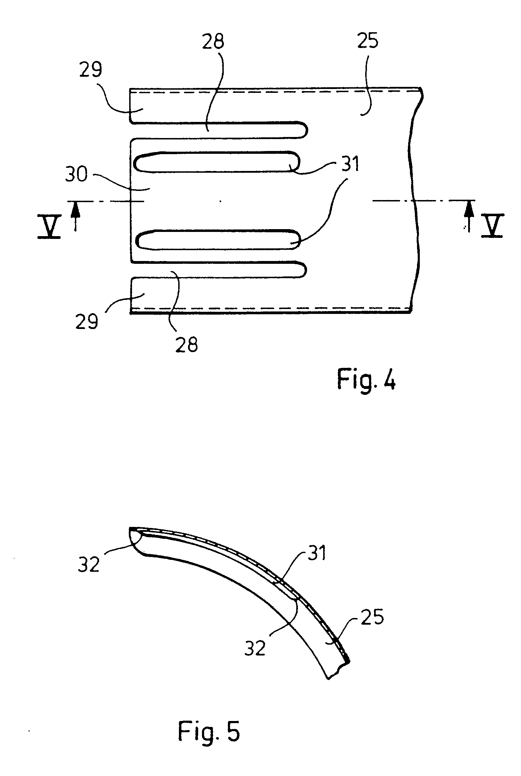

Bei der Ausführungsform nach den Fig. 4 und 5 weist der Endabschnitt 25 des Spannringes anstelle eines zentralen Schlitzes zwei nahe den seitlichen Rändern angeordnete Längsschlitze 28 auf, durch die der Endabschnitt 25 in zwei Randabschnitte 29 und einen Mittelabschnitt 30 unterteilt wird. Die Randabschnitte 29 lassen sich weit genug nach innen biegen, um zwischen die abgewinkelten Ränder am anderen Ende des Spannbandes zu passen. Zugleich haben diese Abschnitte 29 wegen ihres Winkelprofiles eine hohe Eigensteifigkeit.

Der mittlere Abschnitt 30 ist durch zwei Sicken 31 versteift, die dicht neben den Längsschlitzen 28 parallel zu diesen angeordnet sind. Diese Sicken 31 laufen an ihren Enden 32 flach aus, gehen also sanft in die Fläche des Spannbandes über. Dadurch werden scharfe Kanten vermieden, die eine Relativbewegung des Spannbandes gegenüber dem angepreßten Dichtungsring insbesondere beim Anziehen des Spannbandes verhindern könnten. Es ist ersichtlich, daß auch hier eine Struktur geschaffen wird, die es zwar gestattet, den Endabschnitt 25 des Spannbandes zwischen die abgewinkelten Ränder am anderen Ende einzufügen, ohne daß zusätzliche konstruktive Maßnahmen zur Verminderung der Breite dieses Endabschnittes 25 getroffen werden müßten, bei der aber die durch die Schlitze getrennten Abschnitte eine sehr hohe Steifigkeit aufweisen, so daß sie keinen unzulässigen Verformungen ausgesetzt sind.

Es versteht sich, daß die Erfindung nicht auf die dargestellten Ausführungsbeispiele beschränkt ist. So bestünde die Möglichkeit, den Endabschnitt 15 des Spannringes ungeschlitzt zu lassen und ihm auf andere Weise eine verminderte Breite zu erteilen, damit er zwischen die abgewinkelten Ränder 16 am anderen Ende des Spannringes paßt. Die Erfindung ist auch unabhängig von der Anzahl der auf die Spannplatten einwirkenden Spannschrauben. Sie kann insbesondere bei solchen Spannmuffen Anwendung finden, bei denen zwei solcher Spannschrauben parallel zueinander angeordnet sind und die Spannplatten im Bereich zwischen den Spannschrauben geteilt sind, damit sich die Spannmuffe an Rohre unterschiedlicher Durchmesser besser anschmiegen kann. Gerade bei solchen Spannmuffen können erhebliche Deformierungen des Spannringes auftreten, welche durch die Erfindung ohne Nachteil für ein einwandfreies Andrücken des Dichtungsringes bleiben. Die dargestellten Ausführungsformen werden jedoch gegenwärtig sowohl hinsichtlich ihrer Herstellbarkeit als auch hinsichtlich ihrer Funktion als optimale Verwirklichung des Erfindungsgedankens betrachtet.

**Patentansprüche**

1. Spannmuffe für Rohre, bestehend aus einem gummielastischen Dichtungsring (1) und einem den Dichtungsring umgebenden Spannring (2) in Form eines kreisförmig gebogenen Blechstreifens, der radial nach innen abgewinkelte Ränder (16) aufweist, welche die Stirnflächen des Dichtungsringes (1) übergreifen, an dessen Enden nach außen gerichtete, einander gegenüberstehende und von wenigstens einer Spannschraube (6) durchsetzte Spannelemente (5) angebracht sind und bei dem der Spalt zwischen den Spannelementen (5) von einem an der Außenseite des Dichtungsringes (1) anliegenden Blechteil (15; 25) überbrückt wird, das ebenfalls radial nach innen abgewinkelte Ränder (17) aufweist, die an der Überlappungsstelle mit dem Ende des Spannringes (2) zwischen die abgewinkelten Ränder (16) des Spannringes passen, dadurch gekennzeichnet, daß das Blechteil (15; 25) von einem über eines der Spannelemente (5) überstehenden Endabschnitt des Spannringes (2) gebildet wird, der wenigstens einen bis zu seinem Ende reichenden Längsschlitz (18; 28) aufweist.

2. Spannmuffe nach Anspruch 1, dadurch gekennzeichnet, daß ein Längsschlitz (18) in der Mitte des Endabschnittes angeordnet ist und an seinem inneren Ende in einen Querschlitz (19) mündet.

3. Spannmuffe nach Anspruch 2, dadurch gekennzeichnet, daß der Querschlitz (19) im Bereich des Spannelementes (5) angeordnet ist und sich bis nahe an die äußeren Ränder des Spannringes (2) erstreckt.

4. Spannmuffe nach einem der Ansprüche 1 bis 3, dadurch gekennzeichnet, daß sich der Längsschlitz (18) nach außen hin verbreitert.

5. Spannmuffe nach Anspruch 1, dadurch gekennzeichnet, daß zwei Längsschlitze (28) nahe je einem Rand des Endabschnittes angeordnet sind.

6. Spannmuffe nach Anspruch 5, dadurch gekennzeichnet, daß der zwischen den Längsschlitzen (28) liegende Abschnitt (30) des Spannringes durch mindestens eine sich in Umfangsrichtung des Spannringes erstreckende Sicke (31) versteift ist.

7. Spannmuffe nach Anspruch 6, dadurch gekennzeichnet, daß zwei zu den Schlitzen (28) parallele Sicken (31) angeordnet sind.

8. Spannmuffe nach Anspruch 6 oder 7, dadurch gekennzeichnet, daß die Sicken (31) zum Ende des Endabschnittes (25) hin flach auslaufend ausgebildet sind.

**Claims**

1. Coupling socket for pipes, consisting of a rubber-elastic packing ring (1) and, enclosing the packing ring, a clamping ring (2) in the form of a circularly bent strip of sheet metal having radially inwardly angled edges (16) which engage over the end faces of the packing ring (1) and at the ends of which there are outwardly directed mutually opposite clamping elements (5) through which passes at least one clamping screw (6), the gap between the clamping elements (5) being bridged by a sheet metal part (15; 25) bearing on the outer surface of the packing ring (1) and which likewise has radially inwardly angled-over edges (17) which, at the point of overlap with the end of the clamping ring (2), fit between the angled-over edges (16) of the clamping ring, characterized in that the sheet metal part (15; 25) consists of an end portion of the clamping ring (2) which projects beyond one of the clamping elements (5) and which has at least one longitudinal slot (18; 28) extending as far as its end.

2. Coupling socket according to claim 1, characterized in that an elongated slot (18) is disposed in the middle of the end portion and, at its inner end, terminates in a transverse slot (19).

3. Coupling socket according to claim 2, characterized in that the transverse slot (19) is disposed in the region of the clamping element (5) and extends to a location close to the outer edges of the clamping ring (2).

4. Coupling socket according to one of claims 1 to 3, characterized in that the elongated slot (18) widens towards the outside.

5. Coupling socket according to claim 1, characterized in that there are two longitudinal slots (28), each close to one edge of the end portion.

6. Coupling socket according to claim 5, characterized in that the portion (30) of the clamping ring which is disposed between the longitudinal slots (28) is reinforced by at least on bead (31) extending in the peripheral direction of the clamping ring.

7. Coupling socket according to claim 6, characterized in that there are two beads (31) which are parallel with the slots (28).

8. Coupling socket according to claim 6 or 7, characterized in that the beads (31) are constructed to taper off flat towards the end of the end portion (25).

**Revendications**

1. Manchon de serrage pour tuyaux, comprenant un anneau d'étanchéité (1) élastique, caoutchouteux, et un collier de serrage (2) entourant l'anneau d'étanchéité sous la forme d'une bande métallique recourbée sous forme circulaire, qui présente des bords (16) repliés radialement vers l'intérieur, lesquels recouvrent les faces frontales de l'anneau d'étanchéité (1), des éléments de serrage (5) dirigés vers l'extérieur, disposés l'un en face de l'autre et traversés par au moins une vis de serrage (6) étant agencés aux extrémités de cette bande, l'intervalle entre les éléments de serrage (5) étant franchi par une pièce métallique (15; 25) qui est en appui sur la face externe de l'anneau d'étanchéité (1) et qui présente des bords (17) également repliés radialement vers l'intérieur et adaptés, à l'emplacement du recouvrement avec l'extrémité du collier de serrage (2), entre les bords repliés (16) du collier de serrage, caractérisé en ce que la pièce métallique (15; 25) est formée d'une section d'extrémité du collier de serrage (2) qui fait saillie au-delà d'un des éléments de serrage (5) et qui présente au moins une fente longitudinale (18; 28) qui va jusqu'à son extrémité.

2. Manchon de serrage suivant la revendication 1, caractérisé en ce qu'une fente longitudinale (18) est agencée au centre de la section d'extrémité et en ce qu'elle débouche, à son extrémité intérieure, sur une fente transversale (19).

3. Manchon de serrage suivant la revendication 2, caractérisé en ce que la fente transversale (19) est agencée dans la zone de l'élément de serrage (5) et en ce qu'elle s'étend jusqu'à proximité des bords externes du collier de serrage (2).

4. Manchon de serrage suivant l'une des revendications 1 à 3, caractérisé en ce que la fente longitudinale (18) s'élargit vers l'extérieur.

5. Manchon de serrage suivant la revendication 1, caractérisé en ce que deux fentes longitudinales (28) sont chacune agencées à proximité d'un bord de la section d'extrémité.

6. Manchon de serrage suivant la revendication 5, caractérisé en ce que la section (30) du collier de serrage, située entre les fentes longitudinales (28), est renforcée par au moins une moulure (31) qui s'étend dans la direction périphérique du collier de serrage.

7. Manchon de serrage suivant la revendication 6, caractérisé en ce que deux moulures (31) parallèles aux fentes (28) sont agencées.

8. Manchon de serrage suivant l'une des revendications 6 et 7, caractérisé en ce que les moulures (31) sont conformées de façon à se terminer à plat à l'extrémité de la section d'extrémité (25).

Fig. 1

Fig. 2

Fig. 3

**Fig. 4**

**Fig. 5**